# EUROPÄISCHE PATENTSCHRIFT

(11) **EP 0 587 234 B1**
(45) Veröffentlichungstag und Bekanntmachung des Hinweises auf die Patenterteilung: **04.03.1998**
(21) Anmeldenummer: 93202549.7
(22) Anmeldetag: 01.09.1993
(51) Int. Cl.: G11B 15/29, G11B 15/44

(54) **Magnetbandkassettengerät mit einem reversierbaren Laufwerk (Andruckrollenbügel und -feder)**
Magnetic tape cassette apparatus with a reversable drive (pinch roller lever and spring)
Appareil à cassette à bande magnétique avec dispositif d'entraînement à inversion (levier et ressort du galet presseur)

(30) Priorität: 09.09.1992 DE 4230126; 09.09.1992 DE 4230128
(43) Veröffentlichungstag der Anmeldung: 16.03.1994
(73) Patentinhaber: Philips Patentverwaltung GmbH, 22335 Hamburg (DE); Philips Electronics N.V., 5621 BA Eindhoven (NL)
(72) Erfinder: Kunze, Norbert, D-20097 Hamburg (DE); Müller, Dieter, D-20097 Hamburg (DE)
(74) Vertreter: von Laue, Hanns-Ulrich, Dipl.-Ing.

(56) Entgegenhaltungen:
- EP-A- 0 353 815
- EP-A- 0 428 219
- EP-A- 0 432 816
- DE-A- 3 226 712
- GB-A- 2 062 934

## Beschreibung

Die Erfindung bezieht sich auf ein Magnetbandkassettengerät mit einem Laufwerk für Magnetbandkassetten, das für Spiel- und Schnellspulbetrieb in Vorwärts- und Rückwärtsrichtung eingerichtet ist, wobei
- die Umschaltung der Spielrichtung mittels eines Umschaltmechanismus erfolgt, der ein Wickelgetriebe mittels eines Schalthebels von dem einen Wickelteller zu dem anderen Wickelteller des Laufwerkes gegen Ende eines Umschaltvorganges umschaltet,
- das Magnetband mittels Andruckrollen gegen die jeweils das Magnetband fördernde Tonwelle drückbar ist,
- die Andruckrollen in einem beiden gemeinsamen, schwenkbaren Andruckrollenbügel gelagert sind,
- das Schwenken des Andruckrollenbügels mittels Teilen des Umschaltmechanismus erfolgt.

Ein derartiges Magnetbandkassettengerät ist aus der EP 428 219 A2 bekannt. Dieses Magnetbandkassettengerät mit einem reversierenden Laufwerk hat die für diesen Laufwerkstyp notwendigen zwei Tonwellen für den Vorwärts- und Rückwärtsbetrieb. Das Magnetband muß jeweils mittels der einen Tonwelle oder mittels der anderen Tonwelle am Magnetkopf vorbei gezogen werden. Dazu sind Andruckrollen vorgesehen, von denen sich wahlweise die eine für die eine Spielrichtung an die eine Tonwelle und die andere für die andere Spielrichtung an die andere Tonwelle anlegen kann.

Das Wickelgetriebe des Laufwerkes, das die auf Wickeltellern aufsitzenden Bandwickel antreiben kann, ist von dem einen Wickelteller auf den anderen Wickelteller hin und her umschaltbar. Dem Umschalten dient ein das Umschalten durchführender Umschaltmechanismus, zu dem ein zentraler Schalthebel gehört.

Die Andruckrollen sind in einem für beide Andruckrollen gemeinsamen Andruckrollenbügel gelagert, der um eine symmetrisch zu den Tonwellen verlaufenden Schwenkachse an einem Kopfträger verschwenkbar gelagert ist. Das Verschwenken des Andruckrollenbügels erfolgt mittels einer Umkehrplatte, die zur Bestimmung der Vorwärts- und Rückwärtsspielrichtung des Laufwerkes unterschiedliche Stellungen einnimmt, die auch für die Schwenklage des Andruckrollenbügels bestimmend sind, wobei ein Formnocken der Umkehrplatte bei ihrem Umstellen verstellend auf den Andruckrollenbügel einwirkt. Der Formnocken wirkt mit der Kopfplatte zusammen und macht die Schwenklage des Andruckrollenbügels somit abhängig von der Stellung der Umkehrplatte und der Stellung der Kopfplatte.

Ein Formnocken, der mittels Schiebern die Andruckrollen bzw. deren Halter verschwenken kann, ist aus der DE 30 38 380 A1 bekannt. Der Formnocken wirkt dabei über die gegeneinander verspannten Schieber wiederum mittels eigener Vorspannfedern auf die getrennt gelagerten Andruckrollen ein. Diese Konstruktion ist aufwendig und benötigt viele Einzelteile.

Aus der US 45 11 939 ist es bekannt, das Umstellen von Andruckrollen über eine Hebelkette vorzunehmen. Die Andruckrollen selbst sind in einzelnen, ihnen zugeordneten Einzelbügeln gelagert. Die Einzelbügel für die jeweilige Laufrichtung werden von einem Zwischenhebel beaufschlagt, der symmetrisch zu den Tonwellen im Chassis des Laufwerkes schwenkbar gelagert ist. Der Zwischenhebel ist T-förmig gestaltet; in seinem Fußbalken befindet sich eine Profilausnehmung, in die der Übertragungsstift eines Wechselhebels eingreift. Dieser Wechselhebel seinerseits ist schwenkbar im Chassis des Laufwerkes gelagert und wird seinerseits verstellt mittels eines Spulhebels oder Wechselmitteln, die nicht näher beschrieben sind. Dieser Aufbau eignet sich nicht für eine gedrungene Bauweise, wie sie bei Laufwerken für Autoradios, um die es sich im vorliegenden Fall handelt, notwendig ist.

Es ist Aufgabe der Erfindung, den bekannten Schalthebel selbst mit einem einfachen Übertragungsweg zum Umlegen des beide Andruckrollen tragenden Andruckrollenbügels einzusetzen.

Die gestellte Aufgabe ist erfindungsgemäß dadurch gelöst, daß
- der Andruckrollenbügel mit einer Gabel versehen ist, deren Gabelzinken in den Funktionsbereich des Schalthebels greifen,
- die Gabelzinken von dem Schalthebel, wenn dieser das Wickelgetriebe durch sein Umschwenken von der einen Laufrichtung in die andere umschaltet, derart beaufschlagt werden, daß er gleichzeitig den Andruckrollenbügel und damit die Andruckrollen von der einen zur anderen Tonwelle umschaltet.

Diese Anordnung hat den Vorteil, daß der einen weiten Stellweg durchlaufende Stellhebel auf den Andruckrollenbügel einen ausreichend großen Stellweg übertragen kann.

Obwohl die Bewegungsübertragung problemlos vom Schalthebel direkt zum Andruckrollenhebel erfolgen kann, ist nach einer weiteren Ausgestaltung der Erfindung vorgesehen, daß im Stellweg zwischen dem Schalthebel und der Gabel des Andruckrollenbügels ein schwenkbarer Stellhebel vorgesehen ist. Der Übertragungsweg wird dadurch kürzer. In weiterer Ausgestaltung der Erfindung ist dabei vorgesehen, daß der Stellhebel, der um eine chassisfeste Achse drehbar ist, wobei ihm die Stellbewegungen, die an die Gabel weitergegeben werden, vom Schalthebel aufgegeben werden mittels eines Stiftes am Schalthebel, der in einen Längsschlitz des Stellhebels eingreift.

Nach einer weiteren Ausgestaltung der Erfindung ist vorgesehen, daß der Stellhebel mit Gleitkanten versehen ist, die an den Gabelzinken ablaufen können, um den Andruckbügel in die vorgegebene Schwenkstellung zu verschwenken und damit die Druckrollen mit der Tonwelle in Kontakt bringen. Die einzelnen Federarme der Andruckfeder sorgen dabei für den erforderlichen Toleranzausgleich.

Nach einer weiteren Ausgestaltung der Erfindung ist vorgesehen, daß das Magnetband von den Andruckrollen gegen die Tonwellen drückbar ist mittels einer Andruckfeder, wobei der einstückige Andruckrollenbügel, der die Achsen der Andruckrollen in Längsschlitzen lagert, wiederum an einem den Magnetkopf tragenden Kopfträger gelagert und um eine symmetrisch zu den Tonwellen verlaufende Schwenkachse verschwenkbar ist, und die auf die Achsenden beider Andruckrollen drückende Andruckfeder im Bereich der Andruckrollen und ihrer Enden aufgespalten ist in jeweils zwei Federarme, die derart einzeln gegen die Achsenden drücken, daß die Andruckfeder mit ihren Federarmen die einzelnen Achsenden unabhängig voneinander in den Längsschlitzen in Richtung auf die Tonwellen belastet und gegen diese drückt.

Der Vorteil dieser Konstruktion besteht darin, daß die Federarme der einen Andruckfeder die Achsenden so in Richtung auf die Tonwellen zustellen, daß Tonwellenachse und Andruckwellenachse senkrecht zur Bandlaufrichtung praktisch parallel verlaufen. Die Zustellmittel sind die Federarme der Andruckfeder selbst.

Wenn dies erreicht ist, ist es möglich, daß die mit den Tonwellen zusammenwirkenden Oberflächen der Andruckrolle etwa geradzylindrisch ausgebildet sind. Unter geradzylindrisch ist dabei zu verstehen, daß alle Teile der Andruckrollenoberfläche von der Andruckrollenachse her denselben Abstand haben. Die Andruckrollen können damit einen großflächigen Andruck herbeiführen.

Die Erfindung wird anhand der Zeichnung näher erläutert. Es zeigen:
Fig. 1 das Laufwerk für Magnetbandkassetten in einem Magnetbandkassettengerät mit seinem Antriebsgetriebe und seinem Andruckrollenbügel in der Vorwärtsspielrichtung (NOR),
Fig. 2 einen Schnitt durch das Wickelgetriebe des Laufwerkes,
Fig. 3 das Laufwerk nach Fig. 1 in der Rückwärtsspielrichtung (REV),
Fig. 4 eine vergrößerte Darstellung des Andruckrollenbügels mit Andruckfeder und dem an ihm wirkenden Stellmechanismus in der Rückwärtsspielrichtung,

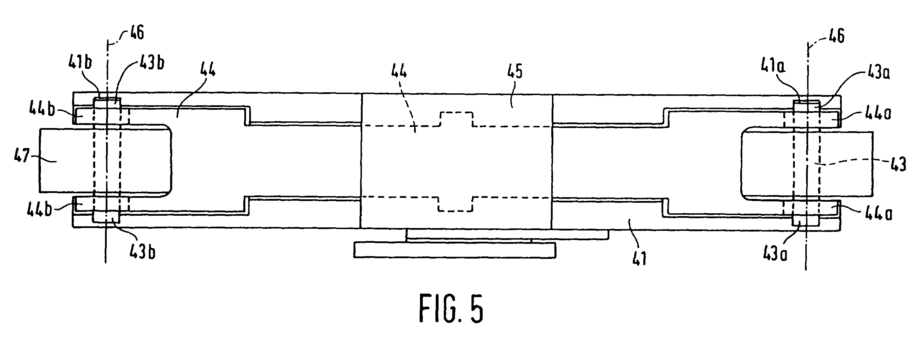

Fig. 5 eine Draufsicht auf die Andruckfeder mit Federarmpaaren.

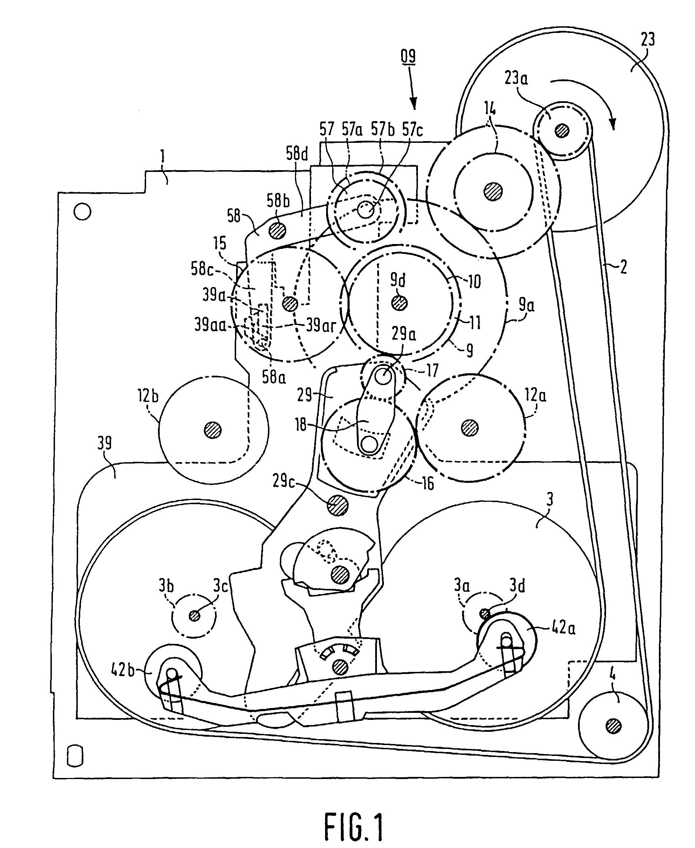

Das Schaubild nach Fig. 1 zeigt auf einem Chassis 1 den Antrieb der bewegten Teile des Laufwerkes. Ein Motor 23, der nur in einer Richtung umlauffähig ist, treibt über eine Peese 2 in entgegengesetzten Richtung Schwungscheiben 3 für die Tonwellen 3c für Rückwärtsspielbetrieb (REV) und 3d für Vorwärtsspielbetrieb (NOR) an. Die Tonwellen 3c, 3d sind mit Verzahnungen 3a und 3b versehen. Die Peese 2 ist über eine Umlenkrolle 4 geführt.

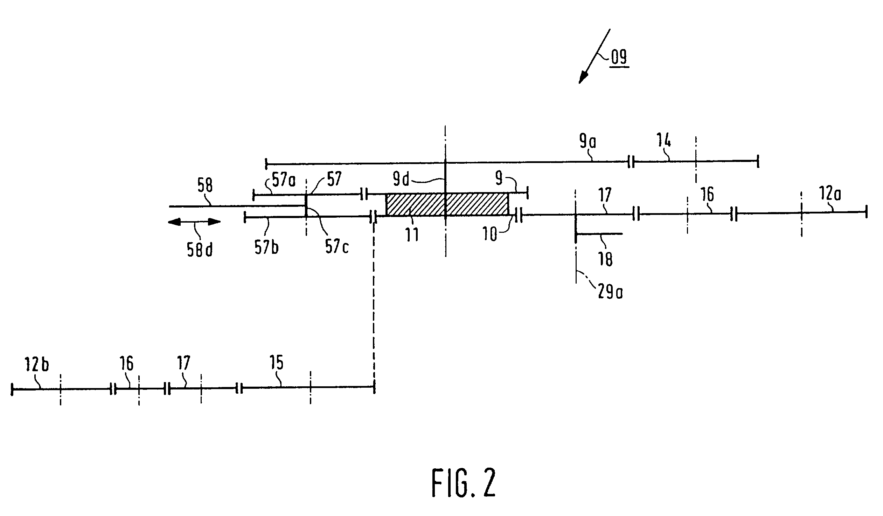

Dem Antrieb eines Vorwärtswickeltellers 12a für den Vorwärtsspielbetrieb (NOR) und eines Rückwärtswickeltellers 12b für den Rückwärtsspielbetrieb (REV) dient ein Wickelgetriebe 09, welches ebenfalls von dem Motor 23 angetrieben wird und welches in Fig. 2 im Schnitt dargestellt ist. Der Motor 23 treibt hierzu mit seiner Welle 23a über ein Antriebszwischenrad 14 die Spielkupplung mit einem Antriebszahnkranz 9a eines Primärkupplungsrades 9 an, welches sich - solange sich die Motorwelle 23a dreht - ständig um eine Welle 9d dreht. Das Primärkupplungsrad 9 treibt ein konzentrisch zu ihm angeordnetes Sekundärkupplungsrad 10 über eine Schlupfkupplung 11 an. Diese kann z. B. eine Schlingfederkupplung, eine Filzkupplung oder auch eine elektromechanische Kupplung sein.

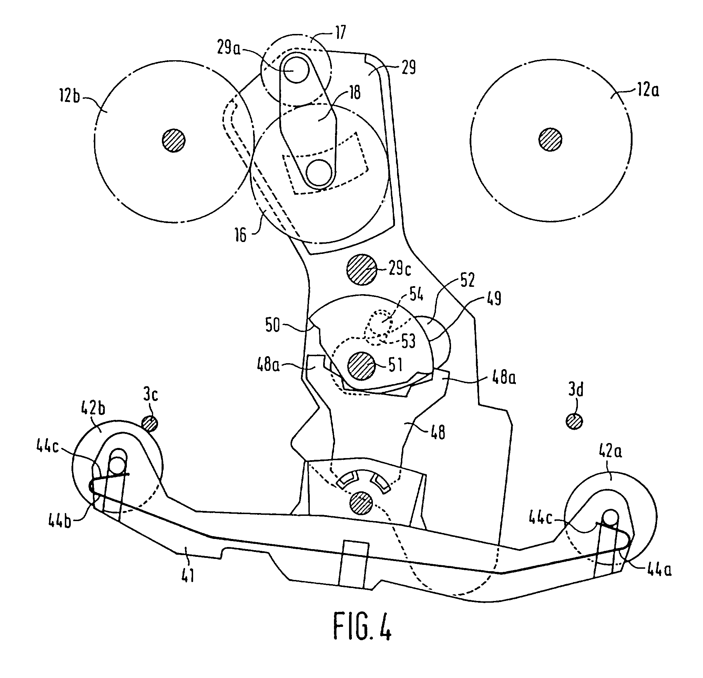

Mit dem Sekundärkupplungsrad 10 ist ein Zwischenrad 17 in Eingriff, das um eine Achse 29a eines Schalthebels 29 drehbar ist. Der Schalthebel 29, der in einer Endstellung für Vorwärtsbetrieb (NOR) oder in einer Endstellung für Rückwärtsbetrieb (REV) stehen kann und in diesen Endlagen festgelegt ist, steht in Fig. 1 im Uhrzeigersinn belastet in der NOR-Stellung und in Fig. 2 und 4 in der REV-Stellung belastet entgegen dem Uhrzeigersinn. Das Zahnrad 17 kämmt mit einem Zahnrad 16, das bei der Darstellung nach Fig. 1 mit dem NOR-Wicketeller 12a im Eingriff ist.

Die Verzahnungskräfte wirken auf die einzelnen Zahnräder so, daß die Paarung: NOR-Wickelteller 12a/Schwenkrad 16 einziehend und die Paarung: Kupplungssekundärrad 10/Zwischenrad 17 ausdrückend sind. Der Schalthebel 29 ist in der NOR-Stellung nach Fig. 1 durch eine nicht dargestellte Schalthebelfeder im Uhrzeigersinn belastet. Die Belastung ist dabei so groß, daß der Schalthebel 29 entgegen den Verzahnungskräften nach rechts, also im Uhrzeigersinn, in Richtung auf den NOR-Wickelteller 12a gedrückt wird.

Zu dem Wickelgetriebe 09 gehört ein Kurzschlußdoppelzahnrad 57, dessen Welle 57a auf einem doppelarmigen, um eine Achse 58b schwenkbaren Kurzschlußradhebel 58 angeordnet ist. Wie ein Doppelpfeil 58d in Fig. 2 zeigt, kann das Kurzschlußrad 57 mit dem Primärkupplungsrad 9 und dem Sekundärkupplungsrad 10 derart in Eingriff oder außer Eingriff gebracht werden, daß beim Eingriff die Kupplung 11 kurzgeschlossen und außer Eingriff die Kupplung wirksam ist. Mit Hilfe dieses Kurzschlußrades 57 können die NOR- und REV-Wickelteller 12a, 12b zum Schnellspulen auf Schnellauf geschaltet werden. Um die höhere Schnellspulgeschwindigkeit zu erhalten, ist das Übersetzungsverhältnis so gewählt, daß die Zähnezahl des Primärkupplungszahnrades 9 größer ist als die Zähnezahl des Sekundärkupplungszahnrades 10 und daß die Zähnezahl des mit dem Zahnrad 9 kämmenden Kurzschlußrades 57 kleiner ist als die Zähnezahl des mit dem Sekundärkupplungsrad 10 kämmenden Kurzschlußrades 57b.

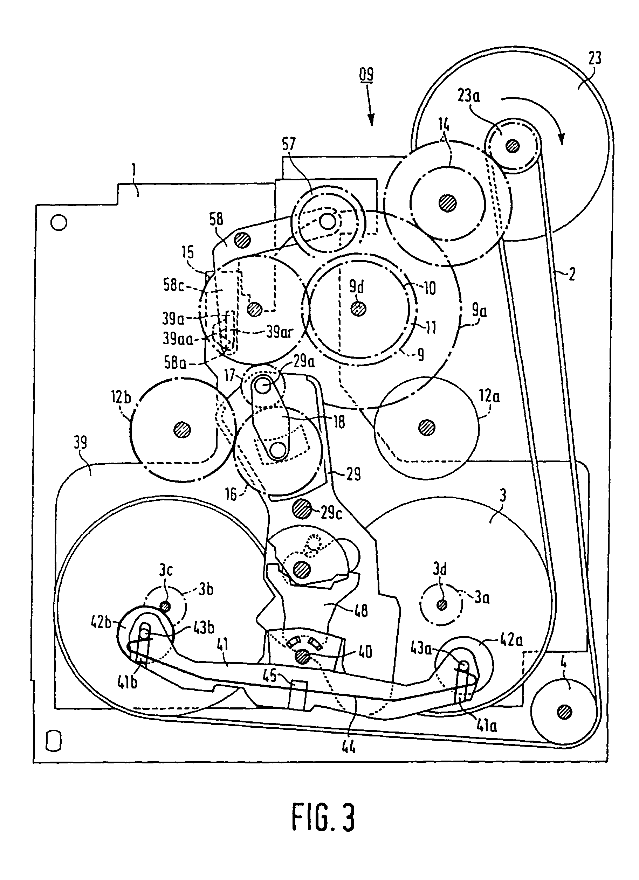

Weiterhin gehört zu dem Wickelgetriebe 09 ein Reverserad 15, das ständig mit dem Sekundärkupplungsrad 10 kämmt. Dieses Reverserad 25 kann beim Reversebetrieb, wie er in Fig. 3 dargestellt ist, über das Zwischenrad 17 und das Schwenkrad 16 den REV-Wickelteller 12b antreiben.

Während an einem Arm des doppelarmigen Kurzschlußhebels 58 das Kurzschlußrad 57 angeordnet ist, trägt der andere Arm 58c des Kurzschlußhebels 58 einen Stellstift 58a, der in einer Leitkontur 39a des Kopfträgers 39 geführt ist. Diese Leitkontur besteht aus einer als Rundlaufführungsbahn ausgebildeten Leitkontur 39a mit einem in der Zeichnung nach links ausgebogenen, schräg ansteigenden linken Bahnteil 39aa und einem geradlinigen rechten Rücklaufbahnteil 3ar, die an ihren Enden miteinander verbunden sind. In der Leitkontur 39a kann der Stellstift 58a umlaufen. Wird der Kopfträger 39 von der Spielstellung in die Schnellaufstellung gedrückt, dann durchläuft der Stellstift 58a den linken Bahnteil 39aa, wobei der Stellstift 58a nach links gezogen wird und das Kurzschlußrad 57 gegen das Primär- und Sekundärkupplungsrad 9 und 10 schwenkt. Bleibt der Kopfträger in dieser Stellung stehen, dann schließt das Kurzschlußrad 57 das Primär- und Sekundärkupplungsrad 9, 10 miteinander kurz. Da die Übersetzung vom Primärkupplungsrad 9 zum Sekundärkupplungsrad 10 über das Kurzschlußrad so gewählt ist, daß das Sekundärkupplungsrad 10 mit größerer Geschwindigkeit umlaufen kann, läßt sich über diese Getriebeanordnung ein Schnellauf der Wickelteller 12a,12b erreichen. Dieser Schnellauf kann ein Schnellvorlauf (SVL) oder ein Schnellrücklauf (SRL) sein.

Während in Fig. 1 der Spielbetrieb in Vorwärtsrichtung dargestellt ist, zeigt Fig. 3 den Spielbetrieb in Rückwärts-(REV)-Richtung. Dabei ist in Fig. 3 zu erkennen, daß der um die Achse 29c schwenkbare Schalthebel 29 entgegen dem Uhrzeigersinn verschwenkt ist. In dieser Stellung kämmt das Zwischenrad 17 mit dem Reverserad 15. Damit erfolgt der Antrieb des REV-Wickeltellers 12b in der REV-Richtung von dem Motor 23 über dessen Welle 23a, das Antriebszwischenrad 14 und den Antriebskranz 9a des Primärkupplungsrades 9, welches ständig in gleichbleibender Richtung im Uhrzeigersinn dreht. Das Primärkupplungsrad 9 treibt über die Reibkupplung 11 das Sekundärkupplungsrad 10 an. Das Sekundärkupplungsrad 10 treibt seinerseits das Reverserad 15 an, welches dann über das Zwischenrad 17 und das Schwenkrad 16 den REV-Wickelteller 12b im dem Uhrzeigersinn dreht.

Die Verzahnungskräfte auf die einzelnen Zahnräder wirken in diesem Fall des REV-Betriebes so, daß die Paarung: REV-Wickelteller 12b/Schwenkrad 16 einziehend und die Paarung: REV-Rad 15/Zwischenrad 17 ausdrückend ist. Der Schalthebel 29 ist durch die Schalthebelfeder gegen den Uhrzeigersinn belastet. Die belastende Kraft ist dabei so hoch, daß der Schalthebel 29 entgegen den Verzahnungskräften entgegen dem Uhrzeigersinn nach links gedrückt wird.

In dem REV-Spielbetrieb nach Fig. 3 ist das Kurzschlußrad 57 von dem Primärkupplungsrad 9 und dem Sekundärkupplungsrad 10 abgehoben, so daß beide Kupplungsräder nur über die Kupplung 11, also mit Schlupfmöglichkeit miteinander in Verbindung stehen.

Zum Übergang von der einen Spielrichtung nach Fig. 1 in die andere Spielrichtung nach Fig. 3 muß der Antrieb reversiert werden. Dieser Reversiervorgang erfolgt automatisch während des Spielbetriebes oder des Bandschnellaufes jeweils am Bandende, wenn das Band stehen bleibt. Das Reversieren ist aber auch durch Tastendruck durchführbar.

Das Laufwerk weist einen Kopfträger 39 auf, der mit einem nicht dargestellten Magnetkopf versehen ist. An einer Achse 40 des Kopfträgers 39 ist symmetrisch zu den Tonwellen 3c, 3d ein Andruckrollenbügel 41 verschwenkbar gelagert. Der Andruckrollenbügel 41 erstreckt sich von der Drehachse 40 nach beiden Seiten zu den Tonwellen 3c, 3d; er hat ein U-förmiges Profil mit Rückwand und zwei abgefalzten Schenkelplatten. Der Andruckrollenbügel 41 weist an seinen Längsenden in den Schenkelplatten Längsschlitze 41a und 41b auf, in denen die Achsenden 43a und 43b der Achse 43 von Andruckrollen 42a, 42b verschieblich gelagert sind. Die Längsschlitze 41a und 41b befinden sich beiderseits von Federarmen 44a und 44b einer Andruckfeder 44.

Die Andruckfeder 44 besteht aus einem Bandstahlstreifen; sie ist nur in ihrem Mittelbereich in einem Klemmelement 45 befestigt; an ihren Enden ist sie zur Ausbildung der gabelförmigen Federarme 44a/b gespalten.

In den Längsschlitzen 41a und 41b werden die Andruckrollen 42a/b mittels der Federarme 44a/b der Andruckfeder in Richtung auf die Tonwellen 3c und 3d belastet. Die Federarme 44a/b jedes Federarmpaares 44a bzw. 44b drücken somit einzeln gegen die Achsenden 43a, 43b und justieren damit die Andruckrollen 42a, 42b. Die andrückenden Andruckfederteile 44c an den freien Enden der Federarme 44a/b sind durch hakenförmiges Zurückbiegen dieser freien Enden gebildet, womit eine Versteifung der Andruckbereiche der Federarme 44a/b erreicht wird.

Durch die Gabel- und Federarmbildung an der Andruckfeder 44 ist die Lage der Andruckrollenachsen 46 gegenüber den Tonwellen 3c, 3d selbsteinstellend, so daß sich die jeweils zusammenwirkenden Achsen immer in eine Parallelstellung schieben. Eine Verkantung aufgrund irgendwelcher Unregelmäßigkeiten ist nicht möglich.

Diese Lageeinstellung der Andruckrollen 42a, 42b macht es möglich, die Oberflächen 47 der Andruckrollen geradzylindrisch oder nahezu geradzylindrisch auszubilden. Damit erfolgt das Andrücken des Magnetbandes gegen die Tonwellen 3c oder 3d im wesentlichen linienförmig und nicht punktförmig, wie bei den bisher ballig ausgebildeten Andruckrollenoberflächen. Der Bandzug wird damit deutlich vergleichmäßigt.

An dem Andruckrollenbügel ist eine Gabel 48 vorgesehen, die zwischen den Tonwellen 3c, 3d hindurch in Richtung auf die Achse 29c des Schalthebels 29 weist. Ihre Gabelzinken 48a wirken mit einem Stellhebel 49 zusammen, der Gleitkanten 50 aufweist, die sich an den Gabelzinken 48a abgleiten können, um den Andruckrollenbügel 41 in die vorgegebene Schwenkstellung zu verschwenken. Der Stellhebel 49 ist um eine Chassislagerung 51 verschwenkbar. An dem Stellhebel 49 befindet sich noch ein Längsschlitz 53, durch den ein Stift 54 des Schalthebels 29 hindurchgreift.

Bei der Darstellung nach Fig. 1 drückt die Andruckrolle 42a gegen die Tonwelle 3d. Die Andruckrolle 42b ist von der Tonwelle 3c abgehoben. Verschwenkt der Schalthebel 29 entgegen dem Uhrzeigersinn, dann verschwenkt der Stellhebel 49, mitgenommen von dem Schalthebel 29, über den Stift 54 ebenfalls entgegen dem Uhrzeigersinn, und die Gleitkante 50 drückt gegen den rechten Gabelzinken 48a. Damit hebt sich die Andruckrolle 42a von der Tonwelle 3d ab, und die Andruckrolle 42b legt sich an die Tonwelle 3c an.

## Patentansprüche

1. Magnetbandkassettengerät mit einem Laufwerk für Magnetbandkassetten, das für Spiel- und Schnellspulbetrieb in Vorwärts- und Rückwärtsrichtung eingerichtet ist, wobei
- die Umschaltung der Spielrichtung mittels eines Umschaltmechanismus erfolgt, der ein Wickelgetriebe (09) mittels eines Schalthebels (29) von dem einen Wickelteller (12a) zu dem anderen Wickelteller (12b) des Laufwerkes gegen Ende eines Umschaltvorganges umschaltet,
- das Magnetband mittels Andruckrollen (42a, 42b) gegen die jeweils das Magnetband fördernde Tonwelle (3c, 3d) drückbar ist,
- die Andruckrollen (42a, 42b) in einem beiden gemeinsamen, schwenkbaren Andruckrollenbügel (41) gelagert sind,
- das Schwenken des Andruckrollenbügels (41) mittels Teilen des Umschaltmechanismus erfolgt,
dadurch gekennzeichnet, daß
- der Andruckrollenbügel (41) mit einer Gabel (48) versehen ist, deren Gabelzinken (48a) in den Funktionsbereich des Schalthebels (29) greifen,
- die Gabelzinken (48a) von dem Schalthebel (29), wenn dieser das Wickelgetriebe (09) durch sein Umschwenken von der einen Laufrichtung in die andere umschaltet, derart beaufschlagt werden, daß er gleichzeitig den Andruckrollenbügel (41) und damit die Andruckrollen (42a/b) von der einen zur anderen Tonwelle (3c, 3d) umschaltet.

2. Magnetbandkassettengerät nach Anspruch 1, dadurch gekennzeichnet, daß im Stellweg zwischen dem Schalthebel (29) und der Gabel (48) des Andruckrollenbügels (41) ein schwenkbarer Stellhebel (49) vorgesehen ist.

3. Magnetbandkassettengerät nach Anspruch 1, oder 2, dadurch gekennzeichnet, daß der Stellhebel (49) um eine chassisfeste Achse (51) drehbar ist, wobei ihm die Stellbewegungen, die an die Gabel (48) weitergegeben werden, vom Schalthebel (29) aufgegeben werden mittels eines Stiftes (54) am Schalthebel (29), der in einen Längsschlitz (53) des Stellhebels (49) eingreift.

4. Magnetbandkassettengerät nach einem der Ansprüche 1 bis 3, dadurch gekennzeichnet, daß der Stellhebel (29) mit Gleitkanten (50) versehen ist, an denen die Gabelzinken (48b) abgleiten können, um den Andruckbügel (41) in die vorgegebene Schwenkstellung zu verschwenken und damit die Andruckrolle (42a, 42b) mit der Tonwelle (3c, 3d) in Kontakt zu bringen.

5. Magnetbandkassettengerät nach Anspruch 1, dadurch gekennzeichnet, daß das Magnetband von den Andruckrollen (42a, 42b) gegen die Tonwellen (3c, 3d) drückbar ist mittels einer Andruckfeder (44), wobei der einstückige Andruckrollenbügel (41), der die Achsen (43) der Andruckrollen in Längsschlitzen lagert, wiederum an einem den Magnetkopf tragenden Kopfträger (39) gelagert und um eine symmetrisch zu den Tonwellen (3c, 3d) verlaufende Schwenkachse (40) verschwenkbar ist, und die auf die Achsenden (43a/b) beider Andruckrollen (42a/b) drückende Andruckfeder (44) im Bereich der Andruckrollen (42a/b) und ihrer Enden aufgespalten ist in jeweils zwei Federarme (42a/b), die derart einzeln gegen die Achsenden (43a/b) drücken, daß die Andruckfeder (44) mit ihren Federarmen (44a/b) die einzelnen Achsen (43a/b) unabhängig voneinander in den Längsschlitzen (41a/b) in Richtung auf die Tonwellen (3c, 3d) belastet und gegen diese drückt.

6. Magnetbandkassettengerät nach Anspruch 5, dadurch gekennzeichnet, daß die freien Enden der Federarme (44a/b) hakenförmig zurückgebogen sind und die zurückgebogenen Enden (44c) der Federarme (44a/b) gegen die Achsenden (43a/b) der Andruckrollenachsen (43) drücken.

## Claims

1. A magnetic-tape-cassette apparatus comprising a deck for magnetic-tape cassettes and constructed for playing and fast winding modes in forward and reverse directions, in which
- the play direction is changed by means of a switching mechanism which switches a reel-drive mechanism (09) from one reel disc (12a) to the other reel disc (12b) of the deck by means of a switching lever (29) towards the end of a switching process,
- pressure rollers (42a, 42b) can press the magnetic tape against the capstan (3c, 3d) which provides the transport of the magnetic tape at the time,
- the pressure rollers (42a, 42b) are supported on a pivotable pressure-roller bracket (41) common to both rollers,
- the pressure-roller bracket (41) is pivoted by means of parts of the switching mechanism, characterized in that
- the pressure-roller bracket (41) comprises a fork (48) whose prongs (48a) extend into the operating range of the switching lever (29),
- the switching lever (29), when it is pivoted to switch the reel-drive mechanism (09) from one transport direction to the other, cooperates with the prongs (48a) in such a manner that at the same time it switches the pressure-roller bracket (41) and hence the pressure rollers (42a/b) from one capstan to the other (3c, 3d).

2. A magnetic-tape-cassette apparatus as claimed in Claim 1, characterized inthat a pivotable actuating lever (49) is arranged in the actuating path between the switching lever (29) and the fork (48) of the pressure-roller bracket (41).

3. A magnetic-tape-cassette apparatus as claimed in Claim 1 or 2, characterized in that the actuating lever (49) is pivotable about a fixed pivot (51) on the chassis, the actuating movements transmitted to the fork (48) being imparted to said actuating lever by the switching lever (29) by means of a pin (54) on the switching lever (29), which pin engages a longitudinal slot (53) in the actuating lever (49).

4. A magnetic-tape-cassette apparatus as claimed in any one of the Claims 1 to 3, characterized in that the actuating lever (29) has sliding edges (50) along which the prongs (48a) can slide to pivot the pressure-roller bracket (41) into the predetermined pivotal position and thereby apply the pressure roller (42a, 42b) to the capstan (3c, 3d).

5. A magnetic-tape-cassette apparatus as claimed in Claim 1, characterized in that the magnetic tape can be pressed against the capstans (3c, 3d) by the pressure rollers (42a, 42b) by means of a pressure spring (44), the common pressure-roller bracket (41), which has longitudinal slots in which the spindles (43) of the pressure rollers are movable, being supported on a head support (39) carrying the magnetic head and being pivotable about a spindle (40) which is disposed symmetrically relative to the capstans (3c, 3d), and the pressure spring (44), which acts upon the spindle ends (43a/b) of the two pressure rollers (42a/b), bifurcates at the location of the pressure rollers (42a/b) and its ends to form two spring arms (44a/b) which individually press against the spindle ends (43a/b) in such a manner that the pressure spring (44) with its spring arms (44a/b) urges the individual spindle ends (43a/b) independently of one another towards the capstans (3c, 3d) in the longitudinal slots (41a/b) and presses them against said capstans.

6. A magnetic-tape-cassette apparatus as claimed in Claim 5, characterized in that, the free ends of the spring arms (4a/b) are bent to form hook-shaped spring portions (44c) which press against the spindle ends (43a/b) of the pressure-roller spindles (43).

## Revendications

1. Appareil à cassette de bande magnétique avec dispositif d'entraînement pour cassettes de bande magnétique, aménagé pour le mode de lecture et rebobinage rapide en avant et en arrière,
- le changement du sens de lecture s'effectuant à l'aide d'un mécanisme d'inversion qui, à l'intervention d'un levier d'inversion (29), fait passer un mécanisme d'enroulement (09) d'un plateau d'enroulement (12a) à un autre plateau d'enroulement (12b) du dispositif d'entraînement à la fin du processus d'inversion,
- la bande magnétique pouvant être pressée à l'aide de galets presseurs (42a, 42b) contre le cabestan transportant la bande magnétique (3c, 3d) en question,
- les galets presseurs (42a, 42b) étant montés dans un étrier pivotant (41) commun aux deux galets presseurs,
- le pivotement de l'étrier de galets presseurs (41) s'effectuant à l'aide de parties du mécanisme d'inversion,
caractérisé en ce que
- l'étrier de galets presseurs (41) est muni d'une fourche (48) dont les fourchons (48a) s'engagent dans la zone de fonctionnement du levier d'inversion (29),
- les fourchons (48a) sont attaqués par le levier d'inversion (29), lorsque ce dernier, en pivotant, fait passer le mécanisme d'enroulement (09) d'un sens de défilement à l'autre, de telle sorte qu'il bascule simultanément l'étrier de galets presseurs (41) et les galets presseurs (42a/b) d'un cabestan à l'autre (3c, 3d).

2. Appareil à cassette de bande magnétique selon la revendication 1, caractérisé en ce qu'est prévu dans le trajet de positionnement entre le levier d'inversion (29) et la fourche (48) de l'étrier de galets presseurs (41) un levier de positionnement pivotant (49).

3. Appareil à cassette de bande magnétique selon la revendication 1 ou 2, caractérisé en ce que le levier de positionnement (49) peut tourner autour d'un axe (51) fixé au châssis, les mouvements de positionnement qui sont transmis à la fourche (48) étant pris en charge par le levier d'inversion (29) au moyen d'un ergot (4) sur le levier d'inversion (29) qui s'engage dans une boutonnière (53) du levier de positionnement (49).

4. Appareil à cassette de bande magnétique selon l'une quelconque des revendications 1 à 3, caractérisé en ce que le levier de positionnement (29) est muni de bords de glissement (50) sur lesquels les fourchons (48b) peuvent glisser, pour faire pivoter l'étrier de galets presseurs (41) dans la position de pivotement prédéterminée et amener ainsi le galet presseur (42a, 42b) en contact avec le cabestan (3c, 3d).

5. Appareil à cassette de bande magnétique selon la revendication 1, caractérisé en ce que la bande magnétique peut être pressée par les galets presseurs (42a, 42b) contre les cabestans (3c, 3d) à l'aide d'un ressort de pression (44), l'étrier de galets presseurs (41), réalisé d'une seule pièce, qui abrite les axes (43) des galets presseurs dans des rainures oblongues, étant à son tour monté sur une plaque porte-tête (39) supportant la tête magnétique et pouvant pivoter autour d'un axe (40) s'étendant symétriquement aux cabestans(3c, 3d,) et en ce que le ressort de pression (44) exerçant une pression sur les extrémités d'axes (43a/b) des deux galets presseurs (42a/b) au niveau de la zone des galets presseurs (42a/b) et de leurs extrémités est divisé en chaque fois deux branches de ressort (42a/b) qui agissent séparément sur les extrémités d'axes (43a/b) de telle manière que le ressort de pression (44), avec ses branches de ressort (44a/b), sollicite les axes individuels (43a/b), indépendamment l'un de l'autre, dans les rainures oblongues (41a/b) en direction des cabestans (3c, 3d) et les pousse contre ces derniers.

6. Appareil à cassette de bande magnétique selon la revendication 5, caractérisé en ce que les extrémités libres des branches de ressort (44a/b) sont recourbées en forme de crochet et que les extrémités recourbées (44c) des branches de ressort (44a/b) exercent une pression sur les extrémités (43a/b) des axes (43) des galets presseurs.
